# EUROPEAN PATENT APPLICATION

(11) **EP 4 800 227 A1**
(43) Date of publication of application: **02.09.2026**
(21) Application number: 25161075.4
(22) Date of filing: 28.02.2025
(51) Int. Cl.: F01N 3/20

(54) **METHOD FOR PROVIDING UREA IN AN UREA DOSING SYSTEM IN CASE OF EXTERNAL LEAKAGE**

(71) Applicant: Volvo Truck Corporation, 405 08 Göteborg (SE)
(72) Inventor: Khayour, Imane, 524 30 Herrljunga (SE); Rizzi, Davide, 444 93 Spekeröd (SE); Lerede, Niclas, 461 32 Trollhättan (SE); Säll, Daniel, 417 28 Göteborg (SE)
(74) Representative: Ex Materia

(57) **Abstract**

The disclosed technology concerns a method for providing a liquid solution from a liquid solution tank at a target pressure to an injector fluidically connected to a pump via a supply line, the pump being fluidically connected to the liquid solution tank, comprising the steps of:
- Running (110) the pump at a first predefined speed;
- After a first duration, measuring (120) the pressure of the liquid solution in the supply line;
- If the measured pressure is lower than a threshold pressure lower than the target pressure, running (140) the pump at a second predefined speed lower than the first predefined speed;
- If the measured pressure is greater than or equal to the threshold pressure, measuring (150) the pressure of the liquid solution in the supply line after a second duration;
- If the measured pressure after the second duration is lower than the target pressure, stop (170) running the pump.

## Description

### TECHNICAL FIELD

The disclosure relates generally to exhaust aftertreatment systems for an engine, for example, but not limited to, of a vehicle. In particular aspects, the disclosure relates to a method for providing urea at a target pressure in an urea dosing system when a leakage is encountered. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During the combustion process inside cylinders of an internal combustion engine (ICE), fuel and air are injected into the cylinders of the ICE and the combustion operating inside the cylinders enables to produce mechanical power intended to be transmitted, via a transmission line, from the output shaft of the ICE to the wheels to ensure the vehicle propulsion. The combustion consists in the chemical reaction inside the cylinder of fuel and dioxygen from the air, thereby forming main products such as water and carbon dioxide as well as unwanted pollutants such as nitrogen oxides (NOx) emissions.

NOx are formed during the combustion process due to the presence of nitrogen in the air. Indeed, when high temperatures in the order of 1300 °C are reached, which is the case inside the cylinder, the nitrogen in the air recombines with the dioxygen to form chemical species such as NO and NO2, gathered under the denomination NOx (nitrogen oxides) emissions.

Emission standards have been introduced to limit the emission of pollutants into the atmosphere. In Europe, the emission standard is called Euro legislations. The disclosed technology contributes to comply with the European emission requirement EU6 and further, such as EU7, as well as the US requirements EPA27 and CARB27. These standards set maximum pollutant emission limits for new vehicles. There are several standards, depending on the type of vehicle. The standards evolve over time and become progressively stricter. Their aim is to reduce air pollution from road transport.

In order to reduce emissions of ICE, several measures are already taken and exhaust aftertreatment systems were developed to limit NOx emissions. One way to process NOx emissions is the use of the selective catalytic reduction (commonly denominated by its abbreviation SCR). For that purpose, a SCR system is placed in the vehicle's exhaust aftertreatment system to convert NOx into nitrogen (N2) and water (H2O). The SCR system comprises a catalyst and a reductant dosing system . The reductant dosing system comprises a pump and an injector. The dosing system may be a dual dosing system having two injectors. In this document, it is made reference to one injector, but as it will appear clear to a person skilled in the art, the same may apply to two (or even more) injectors. The pump is fluidically connected to a reductant tank containing the reductant in a liquid form. When operating, the pump runs in order to set the reductant, such as urea that is able to decompose into ammonia (NH3), at a predefined pressure to provide the reductant to the injector configured to inject the reductant in the exhaust line, upstream of the catalyst. The reductant is mixed with the exhaust gas before entering the SCR catalyst. NOx reduction occurs as the exhaust gas passes through the catalyst. The heat of the exhaust gas causes the reductant (urea) to decompose into ammonia. This decomposition results in a chemical reaction in the SCR catalyst: NOx are transformed into N2 and H2O.

The reductant dosing system plays an important role in the SCR process as it ensures that the right amount of urea is delivered for the above-mentioned chemical reaction to take place. Under insufficient amount of urea injected, an amount of NOx cannot be transformed and may pass through the catalyst without being decomposed, thereby leading to unwanted NOx emissions. Under excessive amount of urea injected, the excessive amount of NH3 that did not transform under the SCR process passes through the catalyst.

Additionally, for the SCR to properly take place, the reductant should be raised at a predefined injection pressure to be provided to the injector before proceeding with the reductant injection into the exhaust line. This pressure build-up is required for ensuring the expected operating of the injector that should execute the injection in a highly dynamic manner at a given time to inject the reductant in the exhaust line, in order to achieve a good mixing of the reductant with the exhaust gas within a short distance between the point of injection of the reductant and the entrance of the catalyst. The pump is therefore commanded to run in order to set the reductant pressure to a target pressure to feed the injector. This operation is also called the pressure build-up. This pressure build-up should be fast to ensure the providing of the reductant to the injector at the target pressure when requested.

Unfortunately, external leakage may occur. It is namely the case when the injection line is physically interrupted. Typically, the output of the pump is fluidically connected to the injector through a pipe and/or a hose. A leakage can be caused by a disconnected hose for example. In case of an external leakage, the reductant is spilled out of the reductant dosing system and the exhaust line. It leads to waste and pollution. In such a situation, the pump should be stopped, not to spread reductant in the environment.

We are faced with colliding objectives: on the one hand, the reductant should be available at the target pressure as soon as a request for reductant injection is emitted. This means that the pump should be run at a high speed. On the other hand, a high speed of the pump is to be avoided in case of an external leakage in order not to pour reductant outside the exhaust line.

The disclosed technology falls within this context and proposes a method and a system for providing the reductant at the target pressure to an injector while avoiding the pouring of reductant outside the exhaust line in case of an external leakage.

The disclosed technology will be described based on the injection of urea into an exhaust line for SCR. Nevertheless, a person skilled in the art will understand that the disclosed technology applies similarly to any dosing system intended to provide a liquid solution at a target pressure to an injector.

### SUMMARY

According to a first aspect of the disclosure, a method for providing a liquid solution at a target pressure to an injector, comprises the steps of:
- Providing a liquid solution tank containing the liquid solution, a pump fluidically connected to the liquid solution tank and intended to provide the liquid solution at the target pressure to the injector fluidically connected to the pump via a supply line;
- Processing a request signal for providing said liquid solution at the target pressure;
- Running the pump at a first predefined speed, thereby increasing the pressure of the liquid solution in the supply line;
- After a first duration, measuring the pressure of the liquid solution in the supply line;
- If the measured pressure of the liquid solution in the supply line after the first duration is lower than a threshold pressure, said threshold pressure being lower than the target pressure, running the pump at a second predefined speed, the second predefined speed being lower than the first predefined speed;
- If the measured pressure of the liquid solution in the supply line after the first duration is greater than or equal to the threshold pressure, measuring the pressure of the liquid solution in the supply line after a second duration;
- If the measured pressure of the liquid solution in the supply line after the second duration is lower than the target pressure, stop running the pump.

The method for providing a liquid solution at the target pressure to the injector comprises two main phases. At the beginning of the method, the pump is activated to bring the liquid solution to a threshold pressure. This is the first phase. The threshold pressure is an intermediate pressure having a value between the value of the liquid solution pressure in the tank and the target pressure. The pump runs at a first speed. Advantageously, this first speed is the maximum speed of the pump. After a first duration, the liquid solution pressure in the supply line is controlled and compared with the threshold pressure.

If this liquid solution pressure is equal to or greater than the threshold pressure, it indicates that the pressure increase of the liquid solution occurs as expected. The pump is further allowed to run at the same first speed.

If the liquid solution pressure is lower than the threshold pressure, the pressure increase did not reach the expected level. This may indicate an external leakage or it may indicate that the pump requires more time to enable the liquid solution to reach the threshold pressure. As a precaution, the speed of the pump is reduced to the second speed (lower than the first speed). The pump still runs and it is verified after a certain duration whether the first pressure level for urea is reached.

Once the threshold pressure is reached, the second phase consists in reaching the target pressure with the pump running at the first predefined speed so as to reach the target pressure in a minimum time. If the target pressure of the liquid solution in the supply line is reached within a second duration, the pressure increase from the threshold pressure to the target pressure occurs as expected. It can be concluded that no external leakage takes place. The pump sets the liquid solution at the target pressure. The pressure build-up is successful and the liquid solution is ready for injection.

On the contrary, if the second pressure level for urea is not reached within a second duration, there is an external leakage in the supply line. The pump is immediately stopped in order to avoid the leakage of liquid solution outside the supply line. It also aims at protection the pump by avoiding it to run unnecessarily. It also leads to a reduced electrical consumption as the pump is stopped once it is detected that a failure occurs.

The method of the disclosed technology relies on a two-stage pressure build-up with an adaptation of the pump speed in between when the pressure of the liquid solution in the supply line does not increase as expected.

Doing so, if there is no external leakage and the pressure of the liquid solution in the supply line increases as expected, the pump runs at its maximum speed and the target pressure is reached as fast as possible. If the pressure threshold is not reached after the first duration, the pump speed is reduced in the first stage, due to an uncertainty about an external leakage. It enables to check whether the threshold pressure can be reached, in which case the method avoids that the pump is stopped too early. The pump runs further, and the second speed is set so as to make it possible that the liquid solution reaches the threshold pressure. Once the liquid solution pressure reaches the threshold pressure within a specified duration, the second phase starts at the first predefined speed.

If there is an external leakage, the second phase taking place above the threshold pressure enables to rapidly detect if the target pressure can be reached. In case the pump runs at its maximum speed, it is expected that the target pressure is reached very fast. If it is not the case, sign of an external leakage, the pump is immediately stopped. In case the pump runs at a reduced speed during the first phase, once the threshold pressure is reached, the pump is set to run at the first speed again. Then, either the target pressure is reached within the second duration, in which case the pressure build-up is successful, or the target pressure is not reached within the second duration, in which case the pressure build-up failed. In this case, the pump is stopped.

Optionally in some examples, including in at least one preferred example, the method further comprises, if the measured pressure of the liquid solution in the supply line after the second duration is equal to or greater than the target pressure, providing the liquid solution to the injector.

In this configuration, the measured pressure of the liquid solution in the supply line after the first duration is equal to or greater than a threshold pressure. The pump is allowed to run at the same speed that enabled the liquid solution to reach the threshold pressure. And the measured pressure of the liquid solution in the supply line after the second duration is equal to or greater than the target pressure. The desired pressure of the liquid solution is reached. It means that the pressure build-up is successful. The liquid solution has reached the target pressure after a predefined duration since the occurrence of the request signal. In this configuration, the system is able to provide the liquid solution at the required pressure to the injector. In other words, the injector is ready to dose and perform injection of the liquid solution.

Optionally in some examples, including in at least one preferred example, the method comprises, after the step of providing the liquid solution to the injector, a step of injecting the liquid solution via the injector to a receiving device.

Once the injector is ready to dose and inject the liquid solution, injection can occur. The liquid solution is injected via the injector to a receiving device.

Optionally in some examples, including in at least one preferred example, the method further comprises, if the measured pressure of the liquid solution in the supply line after the second duration is lower than the target pressure, a step of sending a signal indicating the abortment of the increase of the pressure of the liquid solution in the supply line.

In the configuration in which the liquid solution cannot be set to the target pressure after the second duration, it is concluded that an external leakage occurs. The fluid pathway between the pump and the injector is physically interrupted somewhere in the supply line. As a consequence, maintenance should be operated. The signal may be sent to a person in charge of controlling the operating of the system via an interface, such as a screen, to let him/her know that the pressure build-up failed.

Optionally in some examples, including in at least one preferred example, the liquid solution is a reductant, preferably urea, and the injector is intended to provide the reductant to a receiving device being an aftertreatment device, preferably a SCR system.

As will be detailed below, the disclosed technology finds an application in the field of aftertreatment systems, more particularly for the aftertreatment of NOx emitted by an internal combustion engine.

According to a second aspect of the disclosure, a system for providing a liquid solution at a target pressure to an injector, comprises a liquid solution tank intended to contain the liquid solution, an injector of the liquid solution, a supply line fluidically connected to the injector, a pump fluidically connected to the liquid solution tank and intended to provide the liquid solution at the target pressure to the injector through the supply line, a pressure sensor configured to measure the pressure of the liquid solution in the supply line, a control unit configured to process a request signal for providing said liquid solution at the target pressure, said system being characterized in that the control unit is configured to:
- Send a command of running the pump at a first predefined speed;
- After a first duration, send a command of measuring the pressure of the liquid solution in the supply line;
- If the measured pressure of the liquid solution in the supply line after the first duration is lower than a threshold pressure, said threshold pressure being lower than the target pressure, send a command of running the pump at a second predefined speed, the second predefined speed being lower than the first predefined speed;
- If the measured pressure of the liquid solution in the supply line after the first duration is greater than or equal to the threshold pressure, send a command of measuring the pressure of the liquid solution in the supply line after a second duration;
- If the measured pressure of the liquid solution in the supply line after the second duration is lower than the target pressure, send a command of stopping running the pump.

Optionally in some examples, including in at least one preferred example, the control unit is configured to, if the measured pressure of the liquid solution in the supply line after the second duration is equal to or greater than the target pressure, send a command of providing the liquid solution to the injector.

Optionally in some examples, including in at least one preferred example, the control unit is further configured to send a command of injecting the liquid solution via the injector to a receiving device.

Optionally in some examples, including in at least one preferred example, the control unit is further configured to send a signal indicating the abortment of the increase of the pressure of the liquid solution in the supply line if the measured pressure of the liquid solution in the supply line after the second duration is lower than the target pressure.

Optionally in some examples, including in at least one preferred example, the liquid solution is a reductant, preferably urea, and the injector is intended to provide the reductant to a receiving device being an aftertreatment device, preferably a SCR system.

According to a third aspect of the disclosure, a control unit intended to equip a system for providing a liquid solution at a target pressure to an injector, said system comprising a liquid solution tank intended to contain the liquid solution, an injector of the liquid solution, a supply line fluidically connected to the injector, a pump fluidically connected to the liquid solution tank and intended to provide the liquid solution at the target pressure to the injector through the supply line, a pressure sensor configured to measure the pressure of the liquid solution in the supply line, said control unit is configured to process a request signal for providing said liquid solution at the target pressure, and to:
- Send a command of running the pump at a first predefined speed;
- After a first duration, send a command of measuring the pressure of the liquid solution in the supply line;
- If the measured pressure of the liquid solution in the supply line after the first duration is lower than a threshold pressure, said threshold pressure being lower than the target pressure, send a command of running the pump at a second predefined speed, the second predefined speed being lower than the first predefined speed;
- If the measured pressure of the liquid solution in the supply line after the first duration is greater than or equal to the threshold pressure, send a command of measuring the pressure of the liquid solution in the supply line after a second duration;
- If the measured pressure of the liquid solution in the supply line after the second duration is lower than the target pressure, send a command of stopping running the pump, and optionally send a signal indicating the abortment of the increase of the pressure of the liquid solution in the supply line.

Optionally in some examples, including in at least one preferred example, the control unit is further configured to, if the measured pressure of the liquid solution in the supply line after the second duration is equal to or greater than the target pressure, send a command of providing the liquid solution to the injector.

The system for providing a liquid solution at a target pressure to an injector according to the disclosed technology and the control unit as described above exhibit advantages similar to those of the method for providing a liquid solution at a target pressure to an injector according to the disclosed technology.

According to a fourth aspect of the disclosure, a vehicle comprises an internal combustion engine and a receiving device being an aftertreatment device intended to process exhaust gas from the internal combustion engine, and such a system for providing a liquid solution at a target pressure to an injector intended to provide the liquid solution to the receiving device.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a perspective view of an exemplary vehicle equipped with a system for providing urea to an aftertreatment device according to an example.
**FIG. 2** schematically represents the system for providing urea to an aftertreatment device according to an example.
**FIG. 3** schematically represents the steps of the method for providing urea to an aftertreatment device according to an example.

### DETAILED DESCRIPTION

The detailed description set forth below provides information and examples of the disclosed technology with sufficient detail to enable those skilled in the art to practice the disclosure.

It should be understood that the appended drawings are not necessarily to scale, presenting somewhat simplified representation of various preferred features illustrative of the basic principles of the disclosed technology. The specific design features of the disclosed technology as disclosed herein, including, for example, specific dimensions, orientations, locations, and shapes will be determined in part by the particular intended application and use environment.

The characteristics, variants and various examples of the disclosed technology, as they have been described or as they will be presented in the detailed description which follows, can be associated with each other, according to various combinations, to the extent that they are not incompatible or exclusive with respect to each other. In particular, it will be possible to imagine variants of the disclosed technology comprising only a selection of characteristics described subsequently isolated from the other characteristics described, if this selection of characteristics is sufficient to confer a technical advantage and/or to differentiate the disclosed technology compared to the prior art.

For the sake of clarity, the same elements are designated by the same references in the different figures.

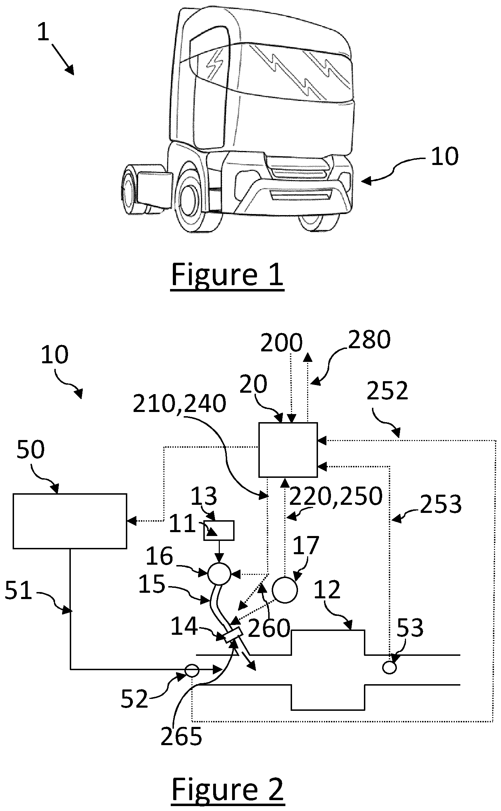

**FIG. 1** is a perspective view of an exemplary vehicle equipped with a system for providing urea to an aftertreatment device according to an example. This system is intended to be applied within the framework of an exhaust line of an internal combustion engine. More specifically, as it will be detailed below, the system is intended to deliver a liquid reductant, such as urea or ammonia, to a SCR system to convert NOx into N2 and H2O. As illustrated, vehicle 1 is a truck. Nevertheless, the method according to the disclosed technology may be applied to any vehicle having an internal combustion engine. As such, the vehicle may be any other type of vehicle, for example a bus or a car. The method for the disclosed technology aims at providing a liquid solution at a target pressure while avoiding the pouring of liquid solution outside the line in which it is intended to be injected in case of an external leakage, for example due to a disconnected hose in the supply system of the liquid solution. It can be therefore applied to any liquid solution. The method of the disclosed technology is particularly appreciated when applied to the urea dosing system in an exhaust aftertreatment system of an internal combustion engine. The method and system for providing a liquid solution at a target pressure to an injector intended to provide the liquid solution to a receiving device will be described in the framework of a receiving device being an aftertreatment device, specifically a SCR system, and the liquid solution being urea (or liquid ammonia).

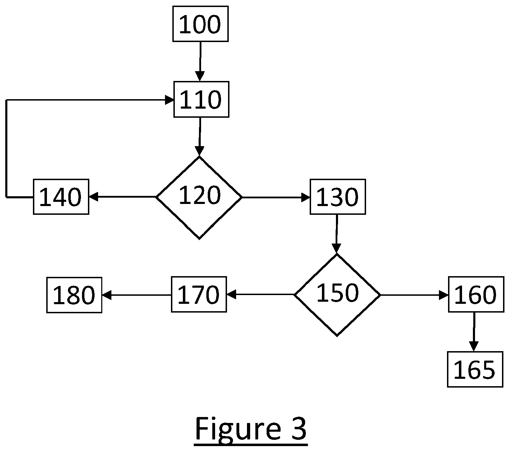

The disclosed technology will be described based on both figure 2 and figure 3.

FIG. 2 schematically represents the system 10 for providing a liquid solution 11, such as urea, to an injector 14 intended to provide the liquid solution 11 to a receiving device 12, such as an aftertreatment device, preferably a SCR system. The system 10 for providing urea 11 at the target pressure Ptar comprises a liquid solution tank 13. The liquid solution tank 13 contains urea 11. The system 10 further comprises an injector 14 of the liquid solution 11. The injector 14 is intended to inject urea into the exhaust line 51 downstream of the internal combustion engine 50 from which exhaust gas are released during the combustion process. The exhaust gas flows through the exhaust line 51. Depending on the type of internal combustion engine and exhaust aftertreatment system associated with the engine, they may pass through various aftertreatment devices, for example particle filter to remove soot from the exhaust gas. In the framework of the disclosed technology, the exhaust line comprises a receiving device 12 being a SCR system configured to transform the NOx in the exhaust gas into N2 and H2O. As explained before, a liquid solution of urea or ammonia needs to be injected into the exhaust line upstream of the SCR system for the SCR to process inside the SCR system.

The system 10 comprises a supply line 15 fluidically connected to the injector 14 and a pump 16 fluidically connected to the liquid solution tank 13 and intended to provide the liquid solution 11 at the target pressure Ptar to the injector 14. When operating, the pump 16 draws the urea 11 contained in the liquid solution tank 13 and should provide the urea 11 at the target pressure via the supply line 15 to the injector 14. The injector 14 is configured to inject the required amount of urea into the exhaust line upstream of the SCR system according to predefined operating instructions stored in a control unit of the vehicle.

The system 10 comprises a pressure sensor 17 configured to measure the pressure Pliq of the urea 11 in the supply line 15. The system also comprises a control unit 20 configured to process a request signal 200 for providing urea 11 at the target pressure Ptar. As depicted in figure 2, the control unit 20 receives the request signal 200. It can be sent by another control unit of the vehicle. Alternatively, the control unit 20 may initiate itself the request signal 200. For example, the vehicle may be equipped with a first NOx sensor 52 upstream of the SCR system 12, and preferably a second NOx sensor 53 downstream of the SCR system 12. The NOx sensors 52, 53 are at least partly mounted in the exhaust line, so that a surface of each sensor is in contact with the exhaust gas flowing in the exhaust gas upstream and downstream of the SCR system. The NOx sensor 52 provides the NOx concentration 252 upstream of the SCR system 12. It means that the NOx sensor 52 indicates how much NOx are present in the exhaust gas entering the SCR system. The NOx sensor 53 provides the NOx concentration 253 downstream of the SCR system 12. It means that the NOx sensor 53 indicates how much NOX are present in the exhaust gas leaving the SCR system. The value 253 should be as low as possible, thereby indicating an efficient NOx treatment through the SCR system. The NOx concentrations 252, 253 are sent to the control unit 20. Based on instructions stored in the control unit 20, the control unit 20 is configured to send the request signal 200 for providing urea 11 to the SCR system. It can be the case if the control unit 20 detects an increase of the NOx concentration 252 between two successive measurements, meaning that the exhaust gas is at least temporarily more loaded in NOx. It can also be the case if the control unit 20 detects a NOx concentration 253 greater than a NOx concentration threshold, meaning that the conversion rate of NOx into N2 and H2O in the SCR system is too low and more urea is required.

The control unit 20 is operatively connected to the pump 16 and configured to process (i.e. receive or initiate) the request signal for providing urea and send commands to the pump 16 to run. The signals received by the control unit 20 and the commands sent by the control unit 20 are schematically represented by dotted lines. The control unit 20 being operatively connected to the pump 16 means that the control unit 20 is able to send instructions to the pump 16. When processing the request signal 200, the control unit 20 sends commands to the pump. These commands comprise starting the pump 16 and/or modifying the speed of the pump 16 at which it operates. These aspects will be detailed together with the description of the method for providing urea to the injector further to the request signal according to the disclosed technology.

As it will appear clearly when reading the description of the details of the disclosed technology below, the communication between the control unit 20 and the other elements of the system 10 and the exhaust line is realized through sensor signals and actuator commands. The transmission of signals and commands to and from the control unit 20 is performed by known communication means, such as wired connection, wireless connection, local area network bus, serial peripheral interface bus, etc. For these purposes, the control unit 20 may comprise at least one processor. Under the term processor, it should be understood at least one of a processor, microprocessor, Application Specific Integrated Circuit (also known under its acronym ASIC), electronic circuit, central processing unit. The control unit 20 may comprise at least one memory component (read only, programmable read only, random access, hard drive, etc.) able to store machine readable instructions accessible by the processor to provide the desired functionality. The disclosed technology is based on an innovative control of the pump 16.

**FIG. 3** schematically represents the steps of the method for providing urea to an injector 14 at a target pressure, so as to provide urea to an aftertreatment device according to an example. In this specific example, the person skilled in the art understands that the liquid solution 11 is urea and the receiving device 12 is the aftertreatment device and more specifically a SCR system configured to convert NOx into N2 and H2O. Of course, as it will appear clearly after reading the description of the disclosed technology, the method of the disclosed technology can apply to any liquid solution that needs to be supplied at a target pressure to an injector with the aim to provide the liquid solution to the receiving device.

The method for providing urea at the target pressure Ptar to the injector 14 comprises the steps of providing a liquid solution tank 13 containing the liquid solution 11 (i.e. urea), a pump 16 fluidically connected to the liquid solution tank 13 and intended to provide the liquid solution 11 at the target pressure Ptar to the injector 14 fluidically connected to the pump 16 via a supply line 15. These elements were described above in connection with figure 2.

The method of the disclosed technology comprises a step 100 of processing a request signal 200 for providing urea 11 at the target pressure Ptar. The request signal 200 may be sent by a control unit of the vehicle, or it can be initiated by the control unit 20. The request signal 200 is an initiating event indicating that injection of urea into the exhaust line 51 is required. The request signal 200 results of a detection of a situation in which the SCR process should take place. That is to say, when an amount of NOx should be converted to N2 and H2O, urea is required for the SCR to take place inside the SCR system. Following the request, urea from the tank 13 should be set at the target pressure to be provided to the injector, so that urea injection by the injector 14 into the exhaust line 51 can occur. The amount of urea provided by the injector 14 is depending on the amount of NOx produced by the internal combustion engine. In other words, the amount of urea is adjusted depending on the NOx value exiting the internal combustion engine.

The method of the disclosed technology comprises a step 110 of running the pump 16 at a first predefined speed V1. The control unit 20 sends a command 210 of running the pump 16 at the first predefined speed V1. In other words, the control unit 20 sends the command 210 to a corresponding actuator of the pump 16 to trigger the pump 16 and make it run at the first predefined speed V1. The aim of the step 110 is to increase the pressure Pliq of urea 11 in the supply line 15.

The method of the disclosed technology further comprises the step 120 of measuring the pressure Pliq of the liquid solution 11 in the supply line 15 after a first duration T1 (for example 15000 milliseconds). The control unit 20 sends a command 220 of measuring the pressure of urea Pliq in the supply line 15. The command 220 is sent to the pressure sensor 17 that is configured to measure the pressure of urea in the supply line 15. The measured value Pliq is sent back to the control unit 20 to be further processed. The pump 16 will be further controlled depending on the measured value Pliq of the pressure of urea in the supply line 15.

The measured value Pliq of the pressure of urea in the supply line 15 is compared with a threshold pressure Pth. The threshold pressure is lower than the target pressure Ptar. As a non-limitative example, the target pressure can be 9 bar and the threshold pressure can be 5 bar.

If the measured pressure Pliq of urea 11 in the supply line 15 after the first duration T1 is lower than a threshold pressure Pth, it means that the pump 16 was not able to increase the pressure of urea to this intermediate level of pressure Pth. One reason for not reaching the threshold pressure Pth might be a leakage in the supply line (what is also called external leakage), for example due to the disconnection of a hose connecting the pump 16 to the supply line 15 or the supply line 15 to the injector 14.

In this case, the method of the disclosed technology comprises a step 140 of running the pump 16 at a second predefined speed V2. The second predefined speed V2 is lower than the first predefined speed V1. It means that if the pump 16 cannot make the urea reach the threshold pressure Pth within the first duration T1, the control unit 20 sends a command 240 of running the pump 16 at the second predefined speed V2. It results in the pump 16 running at a lower speed. As a non-limitative example, the first predefined speed V1 can be 3500 rpm and the second predefined speed V2 can be 1500 rpm. However, the second predefined speed V2 is still high enough to reach the target pressure within a reasonable time in case of priming the pump 16.

The aim of the modification of the speed of the pump 16 from the first predefined speed V1 to the second predefined speed V2 is twofold: it enables to ensure that the target pressure can still be reached in a reasonable time if there is no external leakage, and as the second predefined speed V2 is lower than the first predefined speed V1, it ensures that, in case of external leakage, not much urea is spilled outside the supply line and the pump 16 is prevented from running to fast.

As the second predefined speed V2 is still high enough for urea to reach the target pressure within a reasonable time in case of priming the pump 16, the step 120 of measuring the pressure Pliq of the liquid solution 11 in the supply line 15 after another duration, either a duration equal to the first duration T1 or another predefined duration, is performed again. This another duration may be the same duration T1 starting from the instant when the speed of the pump 16 was modified. Based on the example mentioned above, in case the measured pressure Pliq of urea 11 in the supply line 15 after the first duration T1 of 15000 ms is lower than the threshold pressure Pth, the pump 16 is run at the second predefined speed V2. The pressure Pliq of the liquid solution 11 in the supply line 15 may be measured after another first duration. It means that the pump 16 ran during 15000 ms at the first predefined speed V1 and a first measure of the pressure Pliq was performed. Further to this measure, the pump 16 is run at the second predefined speed V2 during 15000 ms again, and then the pressure Pliq is measured. The measured value is compared to the threshold pressure. If the measured pressure Pliq of urea 11 in the supply line 15 after this new first duration T1 is still lower than the threshold pressure Pth, either the step 120 is repeated or it can be decided, after a predefined number of repetitions of step 120 that a problem occurs and an alert may be sent. The alert can take the form of a message appearing on the dashboard of the vehicle or any other indication to make the driver aware of this problem.

If the measured pressure Pliq of urea 11 in the supply line 15 after the first duration T1 is equal to or greater than the threshold pressure Pth, it means that the pump 16 was able to increase the pressure of urea to this intermediate level of pressure Pth. The pump is allowed to run further at the same speed. If the threshold pressure Pth was reached with the pump 16 running at its speed V1, the pump 16 continues to run at the speed V1. If it was previously detected after the duration T1 that the urea did not reach the threshold pressure and the pump speed was decreased to become V2, and further to the pump running at speed V2, the urea finally reached the threshold pressure, the pump 16 switches to run at the speed V1 in order to reach the target pressure as quick as possible.

Optionally in some examples, including in at least one preferred example, at any point after the first duration T1 and before the second duration T2 has elapsed, if the measured pressure Pliq of the liquid solution 11 in the supply line 15 is higher than the threshold pressure Pth (being lower than the target pressure Ptar), running the pump 16 at the first predefined speed V1 is allowed. The objective is to ensure that the normal pressure build-up time is not further exceeded given that the moment the urea pressure gets above the threshold pressure before the second duration T2, the pump is no longer commanded at the reduced speed V2.

The method of the disclosed technology further comprises a step 150 of measuring the pressure Pliq of urea 11 in the supply line after a second duration T2, if the measured pressure Pliq of the urea 11 in the supply line 15 after the first duration T1 is greater than or equal to the threshold pressure Pth. In the case of an urea pressure greater than or equal to the threshold pressure Pth, it is indicative that the pressure is increasing as expected. As the threshold pressure Pth is reached, the pump 16 runs at the first predefined speed V1, and it is expected that the urea reaches the target pressure after the second duration T2. The second duration T2 is considered to start from the end of the first duration T1. The duration T2 may be equal to the duration T1, or it may be different, depending on the settings of the threshold pressure, the target pressure, the pump capacity.

The control unit 20 sends a command 250 of measuring the pressure Pliq of urea 11 in the supply line 15 after the second duration T2.

The command 250 is sent to the pressure sensor 17 that is configured to measure the pressure of urea in the supply line 15. The measured value Pliq is sent back to the control unit 20 to be further processed.

If the measured pressure Pliq of urea 11 in the supply line 15 after the second duration T2 is equal to or greater than the target pressure Ptar, the pressure build-up is successful. The urea has reached the target pressure Ptar after a predefined elapsed time since the occurrence of the request signal 200. The system 10 is able to provide urea at the required pressure to the injector 14. In other words, the injector 14 is ready to dose and perform injection of urea.

If the measured pressure Pliq of urea 11 in the supply line 15 after the second duration T2 is lower than the target pressure Ptar, it means that the pump 16 could not set the urea pressure to the target pressure. This is indicative of an external leakage. In this case, the method of the disclosed technology comprises a step 170 of stopping running the pump 16. The control unit 20 sends a command 270 of stopping running the pump 16. The attempt of pressure build-up is aborted. The control unit 20 sends the command 270 to an actuator of the pump 16 to turn it down.

The method for providing urea at a target pressure according to the disclosed technology is based on a closed-loop control of the pump 16 to set and maintain the urea at the target pressure. The providing of urea at the target pressure is decomposed into two phases. The first phase consists in reaching a first pressure level, called the threshold pressure, for urea with the pump 16 running at a first speed (possibly the maximum speed of the pump 16). If this first pressure level for urea is reached within a first duration T1, it implies that the pressure increase occurs as expected. It can be concluded that no external leakage takes place. The pump 16 is further allowed to run at the first speed V1. Nevertheless, if the first pressure level for urea is not reached within the first duration T1, it implies that the pressure increase did not reach the expected level. This may be due to the fact that the pump 16 was not activated for quite a long time and a large amount of urea has to be pressurized. Or it may indicate an external leakage. In order to avoid premature wear of the pump 16 and eventually pour urea in the environment in case of external leakage, the speed of the pump 16 is reduced to the second speed V2. The pump 16 still runs and it is verified after a certain duration whether the first pressure level for urea is reached.

Once the first pressure level is reached, the second phase consists in reaching a second pressure level, called the target pressure, for urea with the pump 16 running at the first predefined speed V1 in order to reach the threshold pressure as quickly as possible. If this second pressure level for urea is reached within a second duration T2, it implies that the pressure increase from the threshold pressure to the target pressure occurs as expected. It can be concluded that no external leakage takes place. The pump 16 sets urea at the target pressure. The pressure build-up is successful and urea is ready for injection. On the contrary, if the second pressure level for urea is not reached within a second duration T2, it implies that there is an external leakage in the supply line. The pump 16 is immediately stopped in order to avoid the leakage of urea outside the supply line. It also avoids that the pump 16 runs unnecessarily. It leads to the protection of the pump 16 from wear and tear and to a reduced electrical consumption as the pump 16 is stopped once it is detected that a failure occurs.

Splitting the pressure increase into the two above-mentioned phases enables to ensure a fast pressure build-up or priming in case of no external leakage. Additionally, it avoids that the pump 16 is stopped too early, as the step 140 leads to the pump 16 still running at the second speed V2. In case of external leakage, the second phase taking place above the threshold pressure enables to rapidly detect if the target pressure can be reached. If not, the pump 16 is stopped. In case of external leakage, the duration to reach the threshold pressure in the first phase was longer than the duration T1. It means that the pump 16 operates at a lower speed. It results in a smaller leakage of urea.

Optionally in some examples, including in at least one preferred example, , the method of the disclosed technology may further comprise, if the measured pressure Pliq of urea 11 in the supply line 15 after the second duration T2 is equal to or greater than the target pressure Ptar, a step 160 of providing urea 11 to the injector 14. The control unit 20 is configured to send a command 260 of providing urea 11 to the injector 14, if the measured pressure Pliq of urea 11 in the supply line 15 after the second duration T2 is equal to or greater than the target pressure Ptar.

Optionally in some examples, including in at least one preferred example, , the method further comprises, after the step 160 of providing urea at the target pressure to the injector 14, a step 165 of injecting urea via the injector 14 to the aftertreatment device 12. The control unit 20 is configured to send a command 265 of injecting urea 11 via the injector 14. More precisely, the command 265 activates the injector 14 to proceed with the injection process into the exhaust line. Injecting urea via the injector 14 improves the mixing of urea with the exhaust gas inside the exhaust line.

This step consists in activating the injector 14 to proceed with the injection of urea in the exhaust line 51 upstream of the SCR system. The urea will mix with the exhaust gas and enters the SCR system. The mixture of exhaust gas and urea, under the hot temperature of the exhaust gas and in presence of the catalyst in the SCR system, will lead to the conversion of NOx present in the exhaust gas into N2 and H2O. The injection of urea may be controlled by the control unit 20 that sends a command to the NOx sensor 53 to measure the NOx concentration downstream of the SCR system 12 and retrieves this measured value. If this measured value is equal to or lower than a predefined value of acceptable NOx concentration, it is concluded that the SCR process operates as required. If not, the control unit may control the pump 16 by sending a command to the pump 16 and/or control the injector 14 by sending a corresponding command to the injector 14 to proceed with another urea injection and/or to adapt the quantity of urea injected in the exhaust line.

Optionally in some examples, including in at least one preferred example, , the method of the disclosed technology may further comprise, if the measured pressure Pliq of urea 11 in the supply line 15 after the second duration T2 is lower than the target pressure Ptar, a step 180 of sending a signal indicating the abortment of the increase of the pressure Pliq of urea 11 in the supply line 15. The control unit 20 is therefore configured to send a signal 280 indicating the abortment of the increase of the pressure Pliq of urea 11 in the supply line 15. The signal 280 may be sent to the driver and/or to a remote device for the control of the state of the vehicle.

As it appears clearly throughout the description of the disclosed technology, the preferred application is the supply of urea or ammonia to an injector in order to inject urea or ammonia in the exhaust line upstream of a SCR system. Nevertheless, the disclosed technology applies similarly to any liquid solution 11 (instead of urea) and any receiving device 12 (instead of the SCR system). The disclosed technology therefore ensures that the liquid solution 11 is provided as fast as possible at the target pressure, and in case of an external leakage of the dosing system of the liquid solution, the pump is stopped early enough, thereby avoiding the pouring of the liquid solution outside the dosing system and ensuring that the pump is not exposed to premature wear and tear.

The disclosed technology also relates to a vehicle 1 comprising an internal combustion engine 50 and an aftertreatment device 12, such as a SCR system, intended to process exhaust gas 51 from the internal combustion engine 50, and the system 10 as described before for providing a liquid solution 11, such as urea or ammonia, at a target pressure Ptar to the injector to provide the liquid solution to the aftertreatment device 12.

**Example 1:** A method for providing a liquid solution 11 at a target pressure Ptar to an injector 14, said method comprising the steps of:
- Providing a liquid solution tank 13 containing the liquid solution 11, a pump 16 fluidically connected to the liquid solution tank 13 and intended to provide the liquid solution 11 at the target pressure Ptar to the injector 14 fluidically connected to the pump 16 via a supply line 15;
- Processing 100 a request signal 200 for providing said liquid solution 11 at the target pressure Ptar;
- Running 110 the pump 16 at a first predefined speed V1, thereby increasing the pressure Pliq of the liquid solution 11 in the supply line 15;
- After a first duration T1, measuring 120 the pressure Pliq of the liquid solution 11 in the supply line 15;
- If the measured pressure Pliq of the liquid solution 11 in the supply line 15 after the first duration T1 is lower than a threshold pressure Pth, said threshold pressure Pth being lower than the target pressure Ptar, running 140 the pump 16 at a second predefined speed V2, the second predefined speed V2 being lower than the first predefined speed V1;
- If the measured pressure Pliq of the liquid solution 11 in the supply line 15 after the first duration T1 is greater than or equal to the threshold pressure Pth, measuring 150 the pressure Pliq of the liquid solution 11 in the supply line after a second duration T2;
- If the measured pressure Pliq of the liquid solution 11 in the supply line 15 after the second duration T2 is lower than the target pressure Ptar, stop 170 running the pump 16.

**Example** 2: The method of example 1, further comprising, if the measured pressure Pliq of the liquid solution 11 in the supply line 15 after the second duration T2 is equal to or greater than the target pressure Ptar, providing 160 the liquid solution 11 to the injector 14.

**Example** 3: The method of example 2, comprising, after the step of providing the liquid solution 160 to the injector 14, a step 165 of injecting the liquid solution 11 via the injector 14 to a receiving device 12.

**Example** 4: The method of any one of examples 1 to 3, further comprising, if the measured pressure Pliq of the liquid solution 11 in the supply line 15 after the second duration T2 is lower than the target pressure Ptar, a step 180 of sending a signal indicating the abortment of the increase of the pressure Pliq of the liquid solution 11 in the supply line 15.

**Example 5:** The method of any one of examples 1 to 4, wherein the liquid solution 11 is a reductant, preferably urea, and the injector 14 is intended to provide the reductant to a receiving device 12 being an aftertreatment device, preferably a SCR system.

**Example 6:** A system 10 for providing a liquid solution 11 at a target pressure Ptar to an injector 14, said system comprising a liquid solution tank 13 intended to contain the liquid solution 11, an injector 14 of the liquid solution 11, a supply line 15 fluidically connected to the injector 14, a pump 16 fluidically connected to the liquid solution tank 13 and intended to provide the liquid solution 11 at the target pressure Ptar to the injector 14 through the supply line 15, a pressure sensor 17 configured to measure the pressure Pliq of the liquid solution 11 in the supply line 15, a control unit 20 configured to process a request signal 200 for providing said liquid solution 11 at the target pressure Ptar, said system 10 being characterized in that the control unit 20 is configured to:
- Send a command 210 of running the pump 16 at a first predefined speed V1;
- After a first duration T1, send a command 220 of measuring the pressure of the liquid solution Pliq in the supply line 15;
- If the measured pressure Pliq of the liquid solution 11 in the supply line 15 after the first duration T1 is lower than a threshold pressure Pth, said threshold pressure Pth being lower than the target pressure Ptar, send a command 240 of running the pump 16 at a second predefined speed V2, the second predefined speed V2 being lower than the first predefined speed V1;
- If the measured pressure Pliq of the liquid solution 11 in the supply line 15 after the first duration T1 is greater than or equal to the threshold pressure Pth, send a command 250 of measuring the pressure Pliq of the liquid solution 11 in the supply line 15 after a second duration T2;
- If the measured pressure Pliq of the liquid solution 11 in the supply line 15 after the second duration T2 is lower than the target pressure Ptar, send a command 270 of stopping running the pump 16.

**Example** 7: The system 10 of example 6, wherein the control unit 20 is configured to, if the measured pressure Pliq of the liquid solution 11 in the supply line 15 after the second duration T2 is equal to or greater than the target pressure Ptar, send a command 260 of providing the liquid solution 11 to the injector 14.

**Example 8:** The system 10 of example 7, wherein the control unit 20 is further configured to send a command 265 of injecting the liquid solution 11 via the injector 14 to a receiving device 12.

**Example 9:** The system 10 of any one of examples 6 to 8, wherein the control unit 20 is further configured to send a signal 280 indicating the abortment of the increase of the pressure Pliq of the liquid solution 11 in the supply line 15 if the measured pressure Pliq of the liquid solution 11 in the supply line 15 after the second duration T2 is lower than the target pressure Ptar.

**Example 10:** The system 10 of any one of examples 6 to 9, wherein the liquid solution 11 is a reductant, preferably urea, and the injector 14 is intended to provide the reductant to a receiving device 12 being an aftertreatment device, preferably a SCR system.

**Example 11:** A control unit 20 intended to equip a system 10 for providing a liquid solution 11 at a target pressure Ptar to an injector 14, said system comprising a liquid solution tank 13 intended to contain the liquid solution 11, an injector 14 of the liquid solution 11, a supply line 15 fluidically connected to the injector 14, a pump 16 fluidically connected to the liquid solution tank 13 and intended to provide the liquid solution 11 at the target pressure Ptar to the injector 14 through the supply line 15, a pressure sensor 17 configured to measure the pressure Pliq of the liquid solution 11 in the supply line 15, said control unit 20 being configured to process a request signal 200 for providing said liquid solution 11 at the target pressure Ptar, and to:
- Send a command 210 of running the pump 16 at a first predefined speed V1;
- After a first duration T1, send a command 220 of measuring the pressure of the liquid solution Pliq in the supply line 15;
- If the measured pressure Pliq of the liquid solution 11 in the supply line 15 after the first duration T1 is lower than a threshold pressure Pth, said threshold pressure Pth being lower than the target pressure Ptar, send a command 240 of running the pump 16 at a second predefined speed V2, the second predefined speed V2 being lower than the first predefined speed V1;
- If the measured pressure Pliq of the liquid solution 11 in the supply line 15 after the first duration T1 is greater than or equal to the threshold pressure Pth, send a command 250 of measuring the pressure Pliq of the liquid solution 11 in the supply line 15 after a second duration T2;
- If the measured pressure Pliq of the liquid solution 11 in the supply line 15 after the second duration T2 is lower than the target pressure Ptar, send a command 270 of stopping running the pump 16, and optionally send a signal 280 indicating the abortment of the increase of the pressure Pliq of the liquid solution 11 in the supply line 15.

**Example 12:** The control unit 20 according to example 11, further configured to, if the measured pressure Pliq of the liquid solution 11 in the supply line 15 after the second duration T2 is equal to or greater than the target pressure Ptar, send a command 260 of providing the liquid solution 11 to the injector 14.

**Example 13:** A vehicle 1 comprising an internal combustion engine 50 and a receiving device 12 being an aftertreatment device intended to process exhaust gas 51 from the internal combustion engine 50, and a system 10 for providing a liquid solution 11 at a target pressure Ptar according to any one of examples 6 to 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for providing a liquid solution (11) at a target pressure (Ptar) to an injector (14), said method comprising the steps of:
- Providing a liquid solution tank (13) containing the liquid solution (11), a pump (16) fluidically connected to the liquid solution tank (13) and intended to provide the liquid solution (11) at the target pressure (Ptar) to the injector (14) fluidically connected to the pump (16) via a supply line (15);
- Processing (100) a request signal (200) for providing said liquid solution (11) at the target pressure (Ptar);
- Running (110) the pump (16) at a first predefined speed (V1), thereby increasing the pressure (Pliq) of the liquid solution (11) in the supply line (15);
- After a first duration (T1), measuring (120) the pressure (Pliq) of the liquid solution (11) in the supply line (15);
- If the measured pressure (Pliq) of the liquid solution (11) in the supply line (15) after the first duration (T1) is lower than a threshold pressure (Pth), said threshold pressure (Pth) being lower than the target pressure (Ptar), running (140) the pump (16) at a second predefined speed (V2), the second predefined speed (V2) being lower than the first predefined speed (V1);
- If the measured pressure (Pliq) of the liquid solution (11) in the supply line (15) after the first duration (T1) is greater than or equal to the threshold pressure (Pth), measuring (150) the pressure (Pliq) of the liquid solution (11) in the supply line after a second duration (T2);
- If the measured pressure (Pliq) of the liquid solution (11) in the supply line (15) after the second duration (T2) is lower than the target pressure (Ptar), stop (170) running the pump (16).

2. The method of claim 1, further comprising, if the measured pressure (Pliq) of the liquid solution (11) in the supply line (15) after the second duration (T2) is equal to or greater than the target pressure (Ptar), providing (160) the liquid solution (11) to the injector (14).

3. The method of claim 2, comprising, after the step of providing the liquid solution (160) to the injector (14), a step (165) of injecting the liquid solution (11) via the injector (14) to a receiving device (12).

4. The method of any one of claims 1 to 3, further comprising, if the measured pressure (Pliq) of the liquid solution (11) in the supply line (15) after the second duration (T2) is lower than the target pressure (Ptar), a step (180) of sending a signal indicating the abortment of the increase of the pressure (Pliq) of the liquid solution (11) in the supply line (15).

5. The method of any one of claims 1 to 4, wherein the liquid solution (11) is a reductant, preferably urea, and the injector (14) is intended to provide the reductant to a receiving device (12) being an aftertreatment device, preferably a SCR system.

6. A system (10) for providing a liquid solution (11) at a target pressure (Ptar) to an injector (14), said system comprising a liquid solution tank (13) intended to contain the liquid solution (11), an injector (14) of the liquid solution (11), a supply line (15) fluidically connected to the injector (14), a pump (16) fluidically connected to the liquid solution tank (13) and intended to provide the liquid solution (11) at the target pressure (Ptar) to the injector (14) through the supply line (15), a pressure sensor (17) configured to measure the pressure (Pliq) of the liquid solution (11) in the supply line (15), a control unit (20) configured to process a request signal (200) for providing said liquid solution (11) at the target pressure (Ptar), said system (10) being **characterized in that** the control unit (20) is configured to:
- Send a command (210) of running the pump (16) at a first predefined speed (V1);
- After a first duration (T1), send a command (220) of measuring the pressure of the liquid solution (Pliq) in the supply line (15);
- If the measured pressure (Pliq) of the liquid solution (11) in the supply line (15) after the first duration (T1) is lower than a threshold pressure (Pth), said threshold pressure (Pth) being lower than the target pressure (Ptar), send a command (240) of running the pump (16) at a second predefined speed (V2), the second predefined speed (V2) being lower than the first predefined speed (V1);
- If the measured pressure (Pliq) of the liquid solution (11) in the supply line (15) after the first duration (T1) is greater than or equal to the threshold pressure (Pth), send a command (250) of measuring the pressure (Pliq) of the liquid solution (11) in the supply line (15) after a second duration (T2);
- If the measured pressure (Pliq) of the liquid solution (11) in the supply line (15) after the second duration (T2) is lower than the target pressure (Ptar), send a command (270) of stopping running the pump (16).

7. The system (10) of claim 6, wherein the control unit (20) is configured to, if the measured pressure (Pliq) of the liquid solution (11) in the supply line (15) after the second duration (T2) is equal to or greater than the target pressure (Ptar), send a command (260) of providing the liquid solution (11) to the injector (14).

8. The system (10) of claim 7, wherein the control unit (20) is further configured to send a command (265) of injecting the liquid solution (11) via the injector (14) to a receiving device (12).

9. The system (10) of any one of claims 6 to 8, wherein the control unit (20) is further configured to send a signal (280) indicating the abortment of the increase of the pressure (Pliq) of the liquid solution (11) in the supply line (15) if the measured pressure (Pliq) of the liquid solution (11) in the supply line (15) after the second duration (T2) is lower than the target pressure (Ptar).

10. The system (10) of any one of claims 6 to 9, wherein the liquid solution (11) is a reductant, preferably urea, and the injector (14) is intended to provide the reductant to a receiving device (12) being an aftertreatment device, preferably a SCR system.

11. A control unit (20) intended to equip a system (10) for providing a liquid solution (11) at a target pressure (Ptar) to an injector (14), said system comprising a liquid solution tank (13) intended to contain the liquid solution (11), an injector (14) of the liquid solution (11), a supply line (15) fluidically connected to the injector (14), a pump (16) fluidically connected to the liquid solution tank (13) and intended to provide the liquid solution (11) at the target pressure (Ptar) to the injector (14) through the supply line (15), a pressure sensor (17) configured to measure the pressure (Pliq) of the liquid solution (11) in the supply line (15), said control unit (20) being configured to process a request signal (200) for providing said liquid solution (11) at the target pressure (Ptar), and to:
- Send a command (210) of running the pump (16) at a first predefined speed (V1);
- After a first duration (T1), send a command (220) of measuring the pressure of the liquid solution (Pliq) in the supply line (15);
- If the measured pressure (Pliq) of the liquid solution (11) in the supply line (15) after the first duration (T1) is lower than a threshold pressure (Pth), said threshold pressure (Pth) being lower than the target pressure (Ptar), send a command (240) of running the pump (16) at a second predefined speed (V2), the second predefined speed (V2) being lower than the first predefined speed (V1);
- If the measured pressure (Pliq) of the liquid solution (11) in the supply line (15) after the first duration (T1) is greater than or equal to the threshold pressure (Pth), send a command (250) of measuring the pressure (Pliq) of the liquid solution (11) in the supply line (15) after a second duration (T2);
- If the measured pressure (Pliq) of the liquid solution (11) in the supply line (15) after the second duration (T2) is lower than the target pressure (Ptar), send a command (270) of stopping running the pump (16), and optionally send a signal (280) indicating the abortment of the increase of the pressure (Pliq) of the liquid solution (11) in the supply line (15).

12. The control unit (20) according to claim 11, further configured to, if the measured pressure (Pliq) of the liquid solution (11) in the supply line (15) after the second duration (T2) is equal to or greater than the target pressure (Ptar), send a command (260) of providing the liquid solution (11) to the injector (14).

13. A vehicle (1) comprising an internal combustion engine (50) and a receiving device (12) being an aftertreatment device intended to process exhaust gas (51) from the internal combustion engine (50), and a system (10) for providing a liquid solution (11) at a target pressure (Ptar) according to any one of claims 6 to 10.
